# EUROPEAN PATENT APPLICATION

(11) **EP 4 838 650 A1**
(43) Date of publication of application: **11.11.2026**
(21) Application number: 25833324.4
(22) Date of filing: 27.06.2025
(51) Int. Cl.: H01M 50/169, H01M 50/152, H01M 50/249, H01M 50/107

(54) **BATTERY CELL, AND BATTERY PACK AND VEHICLE COMPRISING SAME**

(30) Priority: 02.07.2024 KR 20240087163; 12.06.2025 KR 20250077296
(71) Applicant: LG Energy Solution, Ltd., Seoul 07335 (KR)
(72) Inventor: KIM, Do-Gyun, Daejeon 34122 (KR); ROH, Sae-Weon, Daejeon 34122 (KR); KIM, Sung-Hwan, Daejeon 34122 (KR); JUNG, Sang-Suk, Daejeon 34122 (KR); CHO, Sung-Min, Daejeon 34122 (KR)
(74) Representative: Goddar, Heinz J.
(86) International application number: PCT/KR2025/009140
(87) International publication number: WO 2026/010265

(57) **Abstract**

Disclosed are a battery cell, and a battery pack and a vehicle including the same. The battery cell includes an electrode assembly having a structure in which a positive electrode plate, a negative electrode plate, and a separator interposed between the positive and negative electrode plates are wound in one direction; a battery can configured to accommodate the electrode assembly and having a first coupling portion formed thereon; and a cap having a second coupling portion formed thereon so as to be coupled to the first coupling portion of the battery can.

## Description

### TECHNICAL FIELD

This application is based on and claims priority from Korean Patent Application No. 10-2024-0087163, filed on July 2, 2024, and Korean Patent Application No. 10-2025-0077296, filed on June 12, 2025, with the Korean Intellectual Property Office, the disclosure of which is incorporated herein in its entirety by reference.

The present disclosure relates to a battery cell, and a battery pack and vehicle including the same and, more specifically, to a battery cell allowing easy welding of a battery can, and a battery pack and vehicle including the same.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell is approximately 2.5V to 4.5V.

Therefore, when an output voltage higher than this is required, a battery module or battery pack may be configured by connecting a plurality of battery cells in series. In addition, a battery module or battery pack may be configured by connecting multiple battery cells in parallel depending on the charge/discharge capacity required for the battery pack. Accordingly, the number of battery cells included in the battery module or battery pack may be set in various ways depending on at least one of the required output voltage and charge/discharge capacity.

Secondary battery cells may be classified into cylindrical, prismatic, and pouch-type battery cells. In the case of a cylindrical battery cell, positive and negative electrode plates are wounded with a separator interposed, as an insulator, between them to form a jelly roll-type electrode assembly, and the electrode assembly is then inserted, along with an electrolyte, into a battery can to form a battery. In addition, the cylindrical battery cell may include a current collector used to electrically connect the positive and negative electrode plates, respectively.

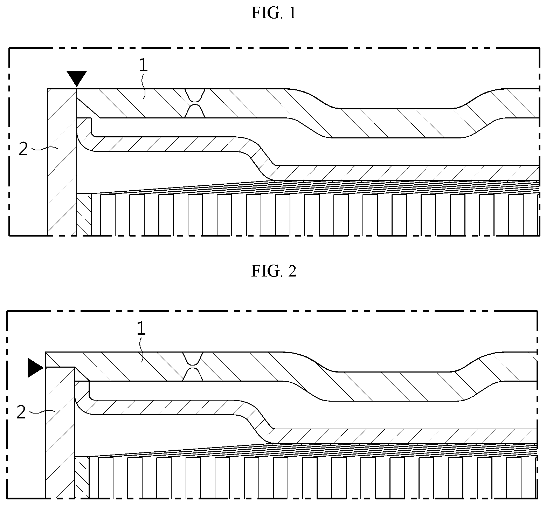

FIG. 1 is a cross-sectional view according to a first embodiment of a conventional cylindrical battery cell in which a cap is coupled to a battery can, and FIG. 2 is a cross-sectional view according to a second embodiment of a conventional cylindrical battery cell in which a cap is coupled to a battery can.

Referring to FIG. 1, a cap 1 is welded from the top while being in close contact with the side surface of a battery can 2 (see arrow). However, at this time, there is a problem that many welding defects occur because it is not easy to bring the cap 1 into close contact with the battery can 2 in parallel.

Referring to FIG. 2, the cap 1 is welded from the side surface (see arrow) while being in contact with the upper side of the battery can 2. However, a gap is created in the welded area by simply placing the cap 1 on the upper side of the battery can 2, and this method also has the problem of causing many welding defects.

### DISCLOSURE

### Technical Problem

Therefore, the present disclosure is directed to providing a battery cell in which a battery can and a cap may be welded smoothly and easily, and a battery pack and a vehicle including the same.

In addition, the present disclosure is directed to providing a battery cell, which may reduce welding defects of the battery can and the cap and improve the quality of the battery cell, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell comprising: an electrode assembly having a structure in which a positive electrode plate, a negative electrode plate, and a separator interposed between the positive and negative electrode plates are wound in one direction; a battery can configured to accommodate the electrode assembly and having a first coupling portion formed thereon; and a cap having a second coupling portion formed thereon so as to be coupled to the first coupling portion of the battery can.

In an embodiment, the first coupling portion may be a coupling groove, and the second coupling portion may be formed as a coupling protrusion.

In an embodiment, the first coupling portion may be a coupling protrusion, and the second coupling portion may be formed as a coupling groove.

In an embodiment, when the first coupling portion is a coupling groove, the coupling groove may include a first straight portion and a first inclined portion formed to be inclined downward from the first straight portion.

In an embodiment, when the second coupling portion is a coupling protrusion, the coupling protrusion may include a second straight portion that is contactable with the first straight portion, and a second inclined portion that is contactable with the first inclined portion and is formed to be inclined downward from the second straight portion.

In an embodiment, the battery can and the cap may be coupled by welding in a state where the first straight portion is in contact with the second straight portion and the first inclined portion is in contact with the second inclined portion.

In an embodiment, the first straight portion may be formed inward in a horizontal direction from a side surface of the battery can, and the first inclined portion may be formed to be inclined downward from an inner end of the first straight portion.

In an embodiment, the second straight portion may be formed outward in a horizontal direction from a side surface of the cap, and the second inclined portion may be formed to be inclined downward from an outer end of the second straight portion.

In an embodiment, a first attachment portion may be attached to at least one of the first straight portion and the first inclined portion.

In an embodiment, the first attachment portion may be a double-sided adhesive tape.

In an embodiment, a second attachment portion may be attached to at least one of the second straight portion and the second inclined portion.

In an embodiment, the second attachment portion may be a double-sided adhesive tape.

In another aspect of the present disclosure, there is provided a battery pack including at least one battery cell described above, and a vehicle including at least one battery cell described above.

### Advantageous Effects

The embodiments of the present disclosure have the effect of enabling smooth and easy welding of a battery can and a cap.

In addition, the present disclosure has the effect of reducing welding defects between the battery can and the cap and improving the quality of the battery cell.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view according to a first embodiment of a conventional cylindrical battery cell in which a cap is coupled to a battery can.
FIG. 2 is a cross-sectional view according to a second embodiment of a conventional cylindrical battery cell in which a cap is coupled to a battery can.
FIG. 3 is a cross-sectional view showing a battery cell according to an embodiment of the present disclosure.
FIG. 4 is a cross-sectional view showing a battery cell according to an embodiment of the present disclosure, in which a first coupling portion of a battery can and a second coupling portion of a cap are separated.
FIG. 5 is a cross-sectional view showing the battery cell of FIG. 4, in which the first coupling portion of the battery can and the second coupling portion of the cap are coupled, and is an enlarged view of portion A of FIG. 3.
FIG. 6 is a drawing according to a first modified embodiment of FIG. 4.
FIG. 7 is a drawing according to a second modified embodiment of FIG. 4.
FIG. 8 is a cross-sectional view showing the battery cell of FIG. 7, in which the first coupling portion of the battery can and the second coupling portion of the cap are coupled.
FIG. 9 is a schematic diagram showing the configuration of a battery pack including the battery cell according to each embodiment of the present disclosure.
FIG. 10 is a diagram showing a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the sizes of respective elements or specific parts of each element are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In this specification, when it is stated that a certain component is "coupled to" or "coupled to" another component, it should be understood that the component may be directly joined or coupled to the other component, or that they may be indirectly joined or coupled via a connecting member provided between them.

Meanwhile, the description of a common component in any one embodiment of the present disclosure may also be applicable to that in other embodiments. For example, the configurations of the second embodiment, which are common to those described in the first embodiment, may refer to the foregoing description of the first embodiment, and the common configurations may also be applicable to the second embodiment. In addition, the description of the second embodiment, which is applicable to the first embodiment, may also be applied to the first embodiment. The same applies to the other embodiments as well.

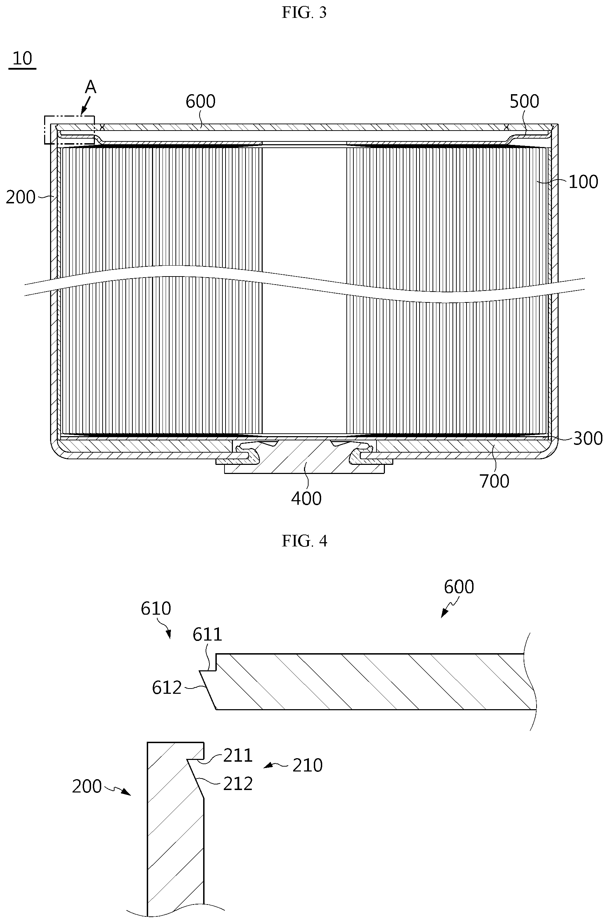

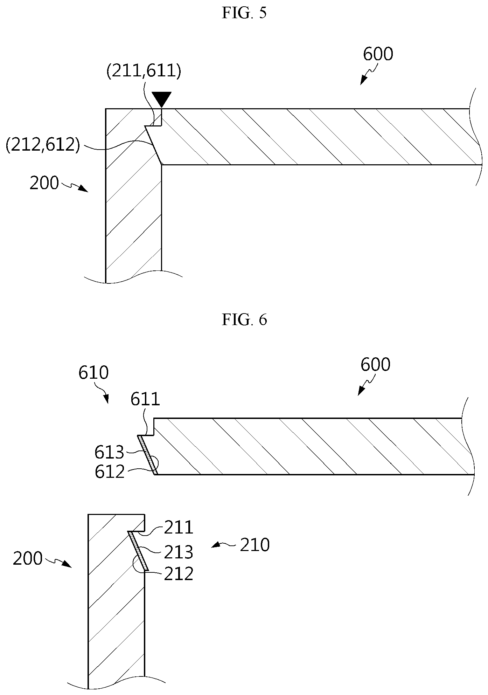

FIG. 3 is a cross-sectional view showing a battery cell according to an embodiment of the present disclosure, FIG. 4 is a cross-sectional view showing a battery cell according to an embodiment of the present disclosure, in which a first coupling portion of a battery can and a second coupling portion of a cap are separated, and FIG. 5 is a cross-sectional view showing the battery cell of FIG. 4, in which the first coupling portion of the battery can and the second coupling portion of the cap are coupled, and is an enlarged view of portion A of FIG. 3.

Referring to FIG. 3, the battery cell 10 according to an embodiment of the present disclosure includes an electrode assembly 100, a battery can 200, and a cap 600.

The electrode assembly 100 has a structure in which a positive electrode plate, a negative electrode plate, and a separator interposed between the positive electrode plate and the negative electrode plate are wound in one direction. In addition, a central hole may be formed at the center of the electrode assembly 100, and the electrode assembly 100 may be formed in a jelly roll shape.

For example, the electrode assembly 100 may be manufactured by winding a stack formed by sequentially stacking, at least once, the negative electrode plate, the separator, the positive electrode plate, and the separator. Here, the positive electrode plate and the negative electrode plate may be configured in a sheet shape.

That is, the electrode assembly 100 applied to this embodiment may be a winding-type electrode assembly 100. In this case, an additional separator may be provided on the outer surface of the electrode assembly 100 for insulation from the battery can 200. That is, the electrode assembly 100 may have any winding structure well known in the relate art.

A positive electrode active material may be coated on one or both sides of the positive electrode plate, and a first uncoated portion on which the positive electrode active material is not coated may be formed at an end of the positive electrode plate. As described above, although the positive electrode plate having the first uncoated portion formed thereon may be provided, the battery cell 10 according to an embodiment of the present disclosure encompasses an embodiment of a positive electrode plate excluding the first uncoated portion. However, for convenience of explanation, the following description will be made based on the case where the first uncoated portion is formed on the positive electrode plate. The first uncoated portion may be wound multiple times around the center of the electrode assembly 100 in a manner such that they are exposed outside the separator, thereby functioning as an electrode tab.

The negative electrode plate may have a negative electrode active material coated on one or both surfaces thereof, and a second uncoated portion not coated with the negative electrode active material may be formed at an end of the negative electrode plate. As described above, a negative electrode plate having a second uncoated portion formed thereon may be provided, but the battery cell 10 according to an embodiment of the present disclosure includes an embodiment of a negative electrode plate in which the second uncoated portion is not formed. However, for convenience of explanation, the following description will focus on a case in which the second uncoated portion is formed on the negative electrode plate. The second uncoated portion may be exposed to the outside of the separator while forming a plurality of winding turns based on the center of the electrode assembly 100, and may be used as an electrode tab in itself.

That is, at least one of the positive electrode plate and the negative electrode plate may include an uncoated portion at the long side end in the winding direction, in which the active material is not coated. In addition, the first uncoated portion and the second uncoated portion may be configured to face in opposite directions.

Here, the positive electrode active material coated on the positive electrode plate and the negative electrode active material coated on the negative electrode plate may employ any active materials known in the art be without limitation.

In addition, the separator may be formed of a porous polymer film made of, for example, a polyolefin-based polymer such as an ethylene homopolymer, a propylene homopolymer, an ethylene-butene copolymer, an ethylene-hexene copolymer, or an ethylene-methacrylate copolymer, in a single layer or multiple layers.

As another example, the separator may be formed of a conventional porous nonwoven fabric, for example, a nonwoven fabric made of high-melting-point glass fibers, polyethylene terephthalate fibers, or the like.

At least one surface of the separator may include a coating layer of inorganic particles. In addition, the separator itself may be formed of a coating layer of inorganic particles. The particles constituting the coating layer may have a structure in which they are bound with a binder to form an interstitial volume between adjacent particles.

In addition, the central hole of the electrode assembly 100 may be used for welding the cell terminal 400 (positive electrode terminal) and the positive electrode current collector plate 300. That is, the electrode assembly 100 may be configured to weld the cell terminal 400 and the positive electrode current collector plate 300 by irradiating a laser beam through the central hole of the electrode assembly 100.

Referring to FIG. 3, a through-hole is formed in the battery can 200 and the electrode assembly 100 is stored therein. For example, the battery can 200 may be formed in a cylindrical shape so that the electrode assembly 100 is stored inside the battery can 200, and electrically connected to the negative electrode plate of the electrode assembly 100. As a result, the battery can 200 may have the same polarity as the negative electrode plate, i.e., the negative polarity.

Referring to FIG. 4, a first coupling portion 210 is formed on the battery can 200. Also, the first coupling portion 210 is coupled to the second coupling portion 610 of the cap 600. This will be described later.

The diameter of the battery can 200 is larger than the diameter of the electrode assembly 100.

In addition, if the size of the electrode assembly 100 is increased in a state where the size of the battery can 200 is determined according to the standard, the total capacity of the battery cell 10 increases, but the gap between the battery can 200 and the electrode assembly 100 decreases, so it is necessary to appropriately adjust the size of the insulator 700 described below.

The battery can 200 may have a closed portion and an open portion, which are positioned to face each other. The electrode assembly 100 is received through the open portion formed in the battery can 200, and electrolyte is also injected through the open portion formed in the battery can 200.

That is, the battery can 200 is a roughly cylindrical container with an open portion formed therein, and may be made of a conductive material, such as metal. The battery can 200 may be made of a conductive metal, such as aluminum, steel, or stainless steel, but is not limited thereto.

In addition, the battery can 200 may have a closed portion. The closed portion may be formed partially on the opposite side of the open portion. A through-hole may be formed in the closed portion. In addition, as shown in FIG. 3, the cell terminal 400 is coupled to the through-hole, and the cell terminal 400 is electrically connected to the positive electrode current collector plate 300 via the through-hole. In addition, referring to FIG. 3, an insulator 700 may be interposed between the battery can 200 and the positive electrode current collector plate 300. The same may be applied to FIG. 2.

The positive electrode current collector plate 300 is electrically connected to the positive electrode plate. For example, referring to FIG. 3, the positive electrode current collector plate 300 is connected to the positive electrode plate of the electrode assembly 100.

The positive electrode current collector plate 300 is made of a conductive metal material and is connected to the first uncoated portion of the electrode assembly 100. The positive electrode current collector plate 300 may be coupled to a coupling surface formed by bending the end of the first uncoated portion in a direction parallel to the positive electrode current collector plate 300. The bending direction of the first uncoated portion may, for example, be a direction toward the central winding portion of the electrode assembly 100.

When the first uncoated portion is bent as described above, the space occupied by the first uncoated portion may be reduced, thereby improving energy density. In addition, the bonding area between the first uncoated portion and the positive electrode current collector plate 300 may increase, leading to improved bonding strength and reduced resistance.

The cell terminal 400 is made of a conductive metal material and is coupled to a through-hole formed in the closed portion of the battery can 200 so that it is electrically connected to the positive electrode current collector plate 300 via the through-hole. In addition, the cell terminal 400 is electrically connected to the positive electrode plate of the electrode assembly 100 through the positive electrode current collector plate 300, thereby having the positive polarity.

That is, the cell terminal 400 may function as a positive electrode terminal. In addition, the battery can 200 may be electrically connected to the negative electrode plate of the electrode assembly 100 as described above, thereby having the negative polarity.

Referring to FIG. 3, the negative electrode current collector plate 500 is electrically connected to the negative electrode plate. The negative electrode current collector plate 500 may be connected to the second uncoated portion of the electrode assembly 100. Here, the negative electrode current collector plate 500 is made of a conductive metal material such as aluminum, steel, copper, or nickel, and may be electrically connected to the second uncoated portion of the negative electrode plate.

The negative electrode current collector plate 500 may be electrically connected to the battery can 200. As a result, the battery can 200 may have the negative polarity. In addition, at least a portion of the edge of the negative electrode current collector plate 500 may be directly welded to the inner wall surface of the battery can 200.

The insulator 700 is interposed between the battery can 200 and the positive electrode current collector plate 300 to prevent contact between the positive electrode of the electrode assembly and the negative electrode of the battery can 200, thereby blocking electrical connection. Therefore, the insulator 700 may be made of a material having electrical insulation performance. The insulator 700 may have a center opening formed in the central portion, and the cell terminal 400 may be electrically connected to the positive electrode current collector plate 300 through the center opening formed in the insulator 700.

Referring to FIG. 3, the cap 600 is configured to close the open portion of the battery can 200. Here, although a vent notch may be formed in the cap 600, this is merely an embodiment, and the vent notch may be formed in the cap 600 or in the battery can 200 so as to close to the location where the cell terminal 400 is formed. That is, the venting direction may be oriented toward the cell terminal 400 or in the direction opposite to the cell terminal 400, and the location of the vent notch may vary depending on the venting direction.

The cap 600 is directly coupled to the battery can 200. Based on FIG. 3, the cap 600 may be coupled to the upper side of the battery can 200. Here, the cap 600 may be coupled to the battery can 200 in various ways, for example, by various welding methods.

However, as described above, there is a problem in that many welding defects occur in the cases of FIGS. 1 and 2.

Therefore, in the battery cell 10 according to an embodiment of the present disclosure, in order to prevent the aforementioned welding defects, a second coupling portion 610 is formed on the cap 600 so as to be coupled to the first coupling portion 210 of the battery can 200, and the first coupling portion 210 and the second coupling portion 610 are coupled to each other.

That is, a first coupling portion 210 is formed on the battery can 200, a second coupling portion 610 is formed on the cap 600, and the second coupling portion 610 of the cap 600 is coupled to the first coupling portion 210 of the battery can 200.

In addition, since welding is performed in a state where the battery can 200 and the cap 600 are coupled through the first coupling portion 210 and the second coupling portion 610 as above, the battery can 200 and the cap 600 may be welded smoothly and easily, and, through this, there is an effect of reducing welding defects of the battery can 200 and the cap 600 and improving the quality of the battery cell 10.

Referring to FIGS. 4 and 5, the first coupling portion 210 may be formed as a coupling groove, and the second coupling portion 610 may be formed as a coupling protrusion.

When the first coupling portion 210 is a coupling groove, the coupling groove may include a first straight portion 211 and a first inclined portion 212 formed to be inclined downward from the first straight portion 211.

Referring to FIG. 4, the first straight portion 211 may be formed inward in a horizontal direction from the side surface of the battery can 200, and the first inclined portion 212 may be formed to be inclined downward from the inner end of the first straight portion 211.

That is, for example, the coupling groove of the first coupling portion 210 may be formed so that the cross-section is recessed inward with an approximately triangular shape from the side surface of the battery can 200. However, the shape of the cross-section of the first coupling portion 210 is not limited to a triangle.

In addition, when the second coupling portion 610 is a coupling protrusion, the coupling protrusion may include a second straight portion 611 that may be in contact with the first straight portion 211, and a second inclined portion 612 that may be in contact with the first inclined portion 212 and is formed to be inclined downward from the second straight portion 611.

Referring to FIG. 4, the second straight portion 611 may be formed outward in a horizontal direction from the side surface of the cap 600, and the second inclined portion 612 may be formed to be inclined downward from the outer end of the second straight portion 611.

That is, for example, the coupling protrusion of the second coupling portion 610 may be formed so that the cross-section protrudes outward in a roughly triangular shape from the side surface of the cap 600. However, the shape of the cross-section of the second coupling portion 610 is not limited to a triangle.

In addition, as in FIG. 5, the first straight portion 211 may be in contact with the second straight portion 611, the first inclined portion 212 may be in contact with the second inclined portion 612, and in this state, welding (see arrows in FIG. 5) may be performed from the upper side. That is, welding is performed in a state where the first coupling portion 210 of the battery can 200 and the second coupling portion 610 of the cap 600 are coupled.

FIG. 6 is a drawing according to a first modified embodiment of FIG. 4.

Referring to FIG. 6, a first attachment portion 213 may be attached to at least one of the first straight portion 211 and the first inclined portion 212. Here, the first attachment portion 213 may be a double-sided adhesive tape, but is not limited thereto.

In addition, a second attachment portion 613 may be attached to at least one of the second straight portion 611 and the second inclined portion 612. Here, the second attachment portion 613 may be a double-sided adhesive tape, but is not limited thereto.

In FIG. 6, the first attachment portion 213 is attached to the first inclined portion 212, and the second attachment portion 613 is attached to the second inclined portion 612. However, if the first attachment portion 213 and the second attachment portion 613 are double-sided adhesive tapes, the attachment portion may be attached to only one of the first inclined portion 212 and the second inclined portion 612.

Also, in FIG. 6, the first attachment portion 213 is not attached to the first straight portion 211, and the second attachment portion 613 is not attached to the second straight portion 611. However, the first attachment portion 213 may be attached to the first straight portion 211, and the second attachment portion 613 may be attached to the second straight portion 611.

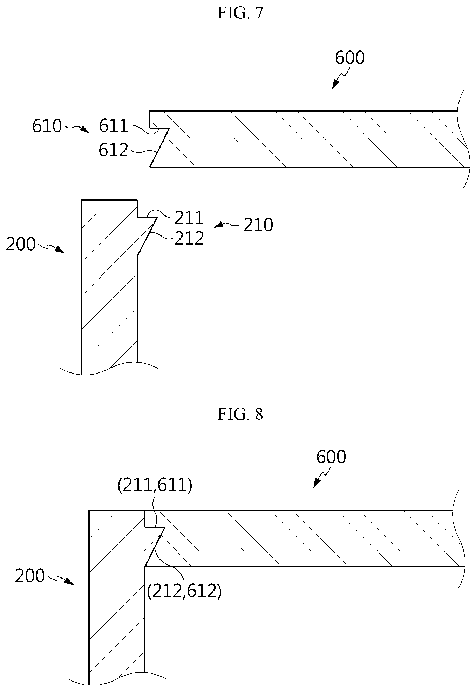

FIG. 7 is a drawing according to a second modified embodiment of FIG. 4, and FIG. 8 is a cross-sectional view showing the battery cell of FIG. 7, in which the first coupling portion of the battery can and the second coupling portion of the cap are coupled.

Referring to FIGS. 7 and 8, the first coupling portion 210 may be formed as a coupling protrusion, and the second coupling portion 610 may be formed as a coupling groove. That is, the first coupling portion 210 formed on the battery can 200 may be a coupling protrusion, and the second coupling portion 610 of the cap 600 may be a coupling groove. In addition, as shown in FIG. 8, the coupling protrusion, which is the first coupling portion 210, may be coupled to the coupling groove, which is the second coupling portion 610, and may be joined by welding.

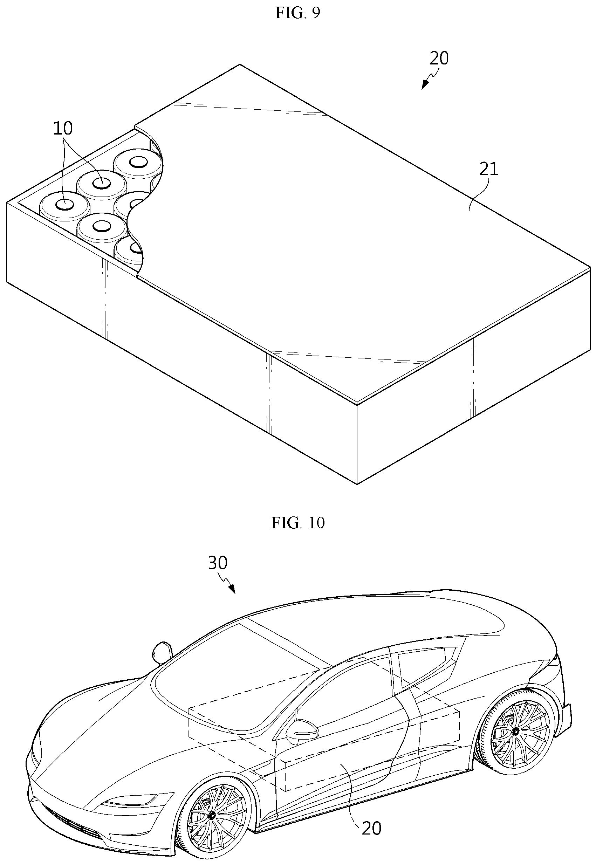

FIG. 9 is a schematic diagram showing the configuration of a battery pack including the battery cell according to each embodiment of the present disclosure.

Referring to FIG. 9, a battery pack 20 according to an embodiment of the present disclosure may include one or more battery cells 10 according to each embodiment of the present disclosure described above. In addition, the battery pack 20 may further include a pack case 21 for storing the battery cells 10 and various devices for controlling the charging and discharging of the battery cells 10, such as a BMS, a current sensor, and a fuse.

FIG. 10 is a diagram showing a vehicle including the battery pack according to each embodiment of the present disclosure.

Referring to FIG. 10, a vehicle 30 according to an embodiment of the present disclosure may include one or more battery cells 10 according to each embodiment described above or one or more battery packs 20 according to each embodiment described above. Here, the vehicle 30 includes various vehicles, such as an electric vehicle or a hybrid vehicle, designed to use electricity.

Although terms indicating directions such as upper, lower, left, right, front, and rear directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the foregoing embodiments should be considered in a descriptive sense only and not for purposes of limitation. That is, the true scope of the technical concept of the present disclosure is defined by the claims, and all variations or modifications equivalent thereto should be interpreted as being included within the scope of the present disclosure.

### INDUSTRIAL APPLICABILITY

The present disclosure relates to a battery cell, and a battery pack and a vehicle including the same, and particularly applicable to industries related to secondary batteries.

## Claims

1. A battery cell comprising:
an electrode assembly having a structure in which a positive electrode plate, a negative electrode plate, and a separator interposed between the positive and negative electrode plates are wound in one direction;
a battery can configured to accommodate the electrode assembly and having a first coupling portion formed thereon; and
a cap having a second coupling portion formed thereon so as to be coupled to the first coupling portion of the battery can.

2. The battery cell according to claim 1,
wherein the first coupling portion is a coupling groove, and the second coupling portion is formed as a coupling protrusion.

3. The battery cell according to claim 1,
wherein the first coupling portion is a coupling protrusion, and the second coupling portion is formed as a coupling groove.

4. The battery cell according to claim 2,
wherein when the first coupling portion is a coupling groove, the coupling groove includes a first straight portion and a first inclined portion formed to be inclined downward from the first straight portion.

5. The battery cell according to claim 4,
wherein when the second coupling portion is a coupling protrusion, the coupling protrusion includes a second straight portion that is contactable with the first straight portion, and a second inclined portion that is contactable with the first inclined portion and is formed to be inclined downward from the second straight portion.

6. The battery cell according to claim 5,
wherein the battery can and the cap are coupled by welding in a state where the first straight portion is in contact with the second straight portion and the first inclined portion is in contact with the second inclined portion.

7. The battery cell according to claim 4,
wherein the first straight portion is formed inward in a horizontal direction from a side surface of the battery can, and the first inclined portion is formed to be inclined downward from an inner end of the first straight portion.

8. The battery cell according to claim 5,
wherein the second straight portion is formed outward in a horizontal direction from a side surface of the cap, and the second inclined portion is formed to be inclined downward from an outer end of the second straight portion.

9. The battery cell according to claim 4,
wherein a first attachment portion is attached to at least one of the first straight portion and the first inclined portion.

10. The battery cell according to claim 9,
wherein the first attachment portion is a double-sided adhesive tape.

11. The battery cell according to claim 5,
wherein a second attachment portion is attached to at least one of the second straight portion and the second inclined portion.

12. The battery cell according to claim 11,
wherein the second attachment portion is a double-sided adhesive tape.

13. A battery pack comprising at least one battery cell according to any one of claims 1 to 12.

14. A vehicle comprising at least one battery cell according to any one of claims 1 to 12.
